# EUROPEAN PATENT APPLICATION

(11) **EP 2 369 513 A2**
(43) Date of publication of application: **28.09.2011**
(21) Application number: 11154047.2
(22) Date of filing: 10.02.2011
(51) Int. Cl.: G06F 17/50

(54) **Methods and systems for constructing multi-dimensional data models for distribution networks**

(30) Priority: 23.02.2010 US 710471
(71) Applicant: Honeywell International Inc., Morristown, NJ 07962 (US)
(72) Inventor: Chen, Henry, 100044, Beijing (CN); Plotcher, Tom, Hugo, MN 55038 (US); Kiff, Liana Maria, Minneapolis, MN 55305 (US); Raymond, Michelle, Minneapolis, MN 55412 (US)
(74) Representative: Buckley, Guy Julian

(57) **Abstract**

Methods, systems, and computer-readable medium are provided for constructing multi-dimensional data models for distribution networks. Geometric features are extricated from a 2D representation of a distribution network comprising a plurality of objects having a relationship to each other within a network. Distribution network elements are generated from the geometric elements according to a network distribution model. The distribution network elements comprise objects and components of the network and include semantic information on associated attributes and relationships thereof. The distribution network element(s) can be validated using rules to detect errors in the generation of the distribution network element(s). The distribution networks element(s) can be refined and a multi-dimensional digital model constructed from the distribution network elements according to the distribution network model.

## Description

### TECHNICAL FIELD

Embodiments generally relate to information methods and systems for constructing digital information models for distribution networks. Embodiments also relate to methods and systems for constructing multi-dimensional digital models of distribution networks from two dimensional (2D) representations. Embodiments additionally relate to software or hardware modules for implementing such methods.

### BACKGROUND OF THE INVENTION

Two dimensional computer readable representations are widely used for the creation and modification of distribution networks and their components. For example, distribution networks such as HVAC (heating, ventilation, and air conditioning) systems, plumbing and piping systems, electrical systems, communications networks, walls, doors, windows, and the like, are represented using CAD application programs. For architecture, engineering, and construction (AEC) environments, CAD drawings are used for creation and modification of complex building structures and their components. CAD systems for AEC projects are gradually evolving into building information model (BIM) authoring systems, but it will be many years before that is commonplace. In the meantime, the plans for almost all legacy buildings have been authored with traditional, non-model based CAD tools.

These drawings, while detailed, generally require human interpretation of the information presented. They lack the ability to support an electronic exchange of discrete pieces of information about the objects in the drawing. This limits their usefulness as means to communicate design information.

While new construction projects will use new 3D methods to represent this data, there remains a large body of legacy data for buildings constructed over the past several decades that is inaccessible in its current 2D form. Therefore, modern methods of using or manipulating this data cannot be applied to existing structures where only 2D models are provided.

There is a need to provide improved methods for constructing digital models from 2D representations.

### BRIEF SUMMARY

The following summary of the invention is provided to facilitate an understanding of some of the innovative features unique to the present invention and is not intended to be a full description. A full appreciation of the various aspects of the invention can be gained by taking the entire specification, claims, drawings, and abstract as a whole.

It is, therefore, one aspect of the present invention to provide for an improved method for constructing digital models from 2D representations.

It is another aspect of the present invention to provide for an improved system for constructing digital models from 2D representations.

The aforementioned aspects of the invention and other objectives and advantages can now be achieved as described herein.

According to one aspect, a method is provided for constructing multi-dimensional data models for distribution networks. The method can comprise: extracting geometric features from a 2D representation of a distribution network; the distribution network comprising a plurality of objects having a relationship to each other within a network; generating distribution network elements from the geometric elements according to a network distribution model; the distribution network elements comprising objects and components of the network and including semantic information on associated attributes and relationships thereof; validating at least one of the distribution network elements using rules to detect errors in the generation of the distribution network element(s); refining at least one of the distribution networks elements; and constructing a multi-dimensional digital model from the distribution network elements according to the distribution network model.

According to another aspect, a system is provided for constructing multi-dimensional digital models for distribution networks. The system can comprise a processor; a data bus coupled to the processor; and a computer-usable medium embodying computer code, the computer-usable medium being coupled to the data bus, the computer program code comprising instructions executable by the processor and configured to: extract geometric features from a 2D representation of a distribution network; the distribution network comprising a plurality of objects having a relationship to each other within a network; generate distribution network elements from the geometric elements according to a network distribution model; the distribution network elements comprising objects and components of the network and including semantic information on associated attributes and relationships thereof; validate at least one of the distribution network elements using rules to detect errors in the generation of the distribution network element(s); refine at least one of the distribution networks elements; and construct a multi-dimensional digital model from the distribution network elements according to the distribution network model.

According to yet another aspect, there is provided a computer-readable medium storing instructions that, when executed by a computer, can cause the computer to perform the aforementioned methods for constructing a multi-dimensional data model for a distribution network.

### BRIEF DESCRIPTION OF THE DRAWINGS

The accompanying figures, in which like reference numerals refer to identical or functionally-similar elements throughout the separate views and which are incorporated in and form part of the specification, further illustrate embodiments of the present invention.

FIG. 1 illustrates an exemplary computer system in which the present invention may be embodied;

FIG. 2 illustrates a computer software system according to one embodiment for implementing methods for constructing multi-dimensional digital models for distribution networks from two dimensional representations;

FIG. 3 illustrates a flow chart outlining a method for constructing a multi-dimensional digital model for a distribution network from two dimensional representation, according to an embodiment;

FIGS. 4A & 4B illustrate flow charts of particular processes used in the method of FIG. 3;

FIGS. 5A-D illustrate exemplary display images rendered on a user interface for use in an object extraction process of FIG. 4A,

FIGS. 6-8 illustrate exemplary display images of different data extracted from 2D drawing data and rendered on the user interface according to one embodiment;

FIG. 9 illustrates a control display of the heuristic editor system rendered on the user interface according to one embodiment;

FIG. 10 illustrates an exemplary HVAC 2D computer drawing data rendered on a user interface;

FIG. 11 illustrates an exemplary HVAC 3D computer drawing rendered on a user interface; and

FIG. 12 illustrates an exemplary multi-dimensional digital model for a HVAC system constructed from the exemplary HVAC 2D computer drawing data of FIG. 10.

### DETAILED DESCRIPTION

The particular values and configurations discussed in these non-limiting examples can be varied and are cited merely to illustrate an embodiment of the present invention and are not intended to limit the scope of the invention.

A distribution network is defined herein to mean any collection of elements, these elements having a specific relationship to each other within a network, and which together provide a means to deliver a specific service. Distribution network elements are objects as well as network components of the network interconnecting the objects. Within these distribution networks, equipment required to direct the flow, capacity, and quality of some media (air, water, oil or chemicals, electricity, or data, for example) is generally connected by a conduit for distributing the media (e.g., pipes, ducts, cables).

Different domains may have different types of distribution networks. By way of example, in the domain of architecture, engineering, and/or construction (AEC) environment, the distribution network may be a building distribution network, such as a HVAC (heating, ventilation, and air conditioning) system, plumbing, system, piping system, electrical system, communication network, security system, control system, and the like, or it may be a network of walls, doors, and windows that comprise part of the physical structure. In the domain of industrial facilities, the distribution network can be the set of equipment in an industrial facility, for example, pumps, generators, tanks, and mixing equipment, interconnected by, for example, piping, valves, splitters, and/or duct work, to perform a particular industrial process. For example, an industrial distribution network may be a refinery or batch chemical plant that is connected together by pipes and valves to perform some refining or production process. In the domain of security and control, the distribution network can, for example, be a fire alarm or security system having detectors, sensors, and/or alarm devices, interconnected over a network of a data processing system or computer network.

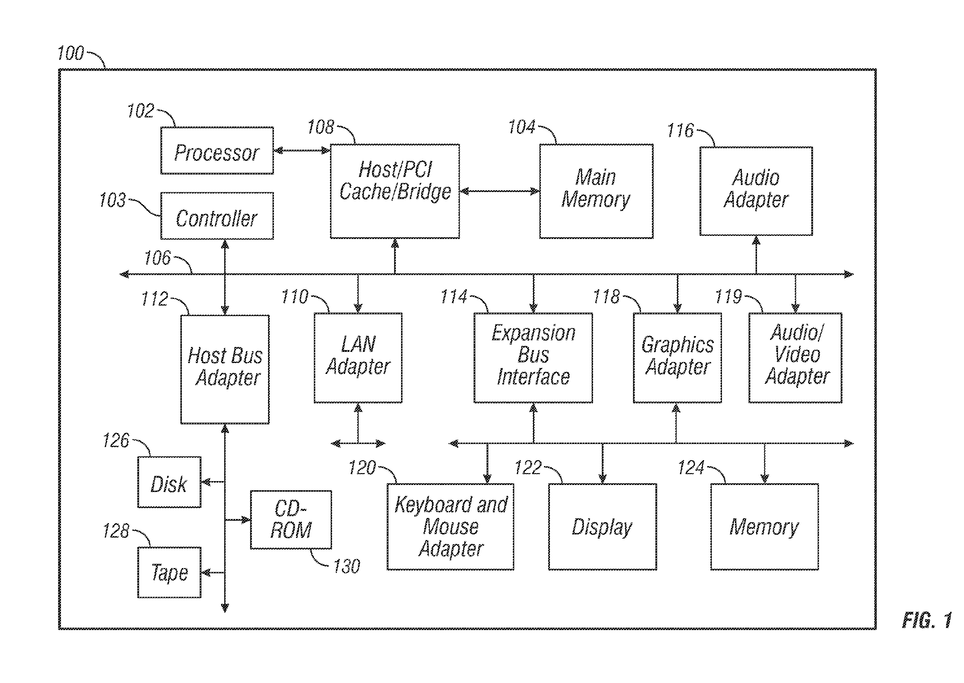

Virtually any distribution network can be described using methods and systems of the illustrative embodiments. It would be understood by one versed in the art that any distribution network that can be depicted on paper using a 2-dimensional representation may be the subject distribution network of this invention. Examples of other such distribution networks include the computer system depicted in Figure 1 and distribution networks installed in any environment, such as an aircraft, spacecraft, and mining environment, for example.

As will be explained in more detail below, methods and systems according to the embodiments construct a multi-dimensional digital model for a distribution network from a 2D representation. The distribution network model of a distribution network for a specific domain is defined by a developer or user. The model describes rules for generating distribution network elements based on geometric elements extracted from the 2D representation of the distribution network and rules for constructing a multi-dimensional data digital model from these distribution network elements for the distribution network. The multi-dimensional digital model can be a relational data model.

FIG. 1 is a block diagram showing typical architecture of a computer automated system which is suitable for implementing aspects of methods and systems for constructing multi-dimensional digital models for distribution networks, according to embodiments. The depicted example is not meant to imply architectural limitations with respect to embodiments, but is presented for general illustrative and edification purposes only.

As shown in FIG. 1, automated data processing system 100 can employ a peripheral component interconnect (PCI) local bus architecture. Although the depicted example employs a PCI bus, other bus architectures such as Micro Channel and ISA may be used. The processor 102 and a main memory 104 can be connected to PCI local bus 106 through PCI Bridge 108. PCI Bridge 108 may also include an integrated memory controller and cache memory for processor 102. Alternatively, a controller 103 can communicate with PCI local bus 106 to provide additional architectural support. Controller 103 may be utilized in place of or to complement an integrated memory controller and cache memory for processor 102. A display 122 is coupled to the processor 102 and memory 104.

Additional connections to PCI local bus 106 may be made through direct component interconnection or through add-in boards. In the depicted example, local area network (LAN) adapter 110, host bus adapter 112, and expansion bus interface 114 are connected to PCI local bus 106 by direct component connection. In contrast, audio adapter 116, graphics adapter 118, and audio/video adapter (A/V) 119 are connected to PCI local bus 106 by add-in boards inserted into expansion slots. Expansion bus interface 114 provides a connection for a keyboard and mouse adapter 120, display 122, and additional memory 124. Host bus adapter 112 provides a connection for hard disk drive 126, tape drive 128, and CD-ROM 130 in the depicted example.

Those of ordinary skill in the art will appreciate that the hardware in FIG. 1 may vary. For example, other peripheral devices, such as optical disc drives and the like, may be used in addition to or in place of the hardware depicted in FIG. 1. Whilst FIG. 1 illustrates the data processing system implemented on a computer, the data processing system can implemented over a local or wide area network such as, for example, the internet which represents a worldwide collection of networks and gateways that use the Transmission Control Protocol/Internet Protocol (TCP/IP) suite of protocols to communicate with one another. Of course, data processing system may also be implemented over a number of different types of networks such as, for example, an intranet, a local area network (LAN), or a wide area network (WAN).

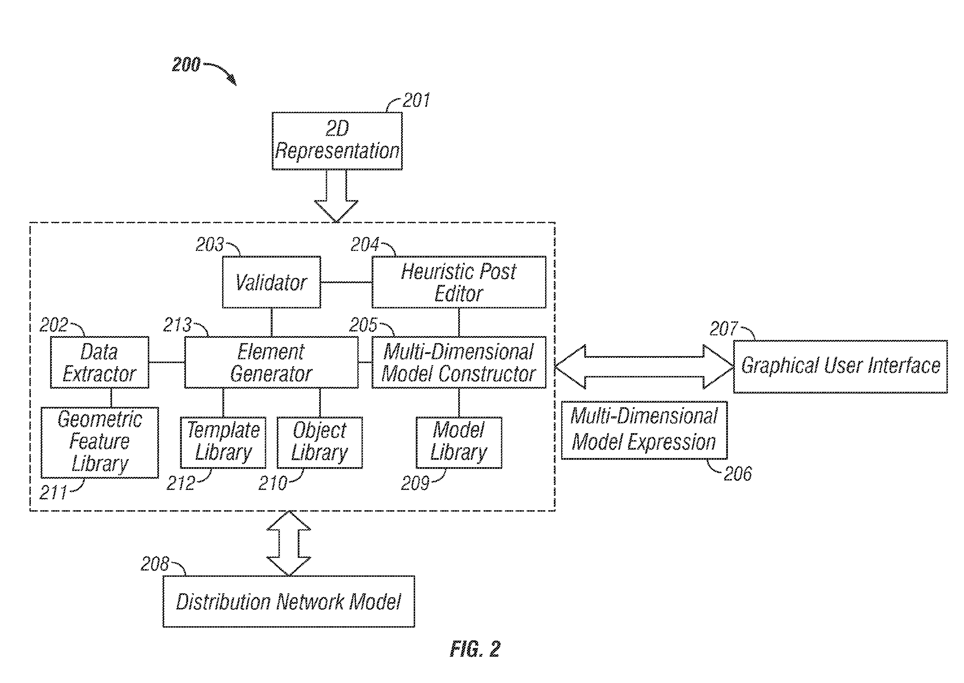

FIG. 2 illustrates a computer software system 200 for directing the operation of the data-processing system 100 depicted in FIG. 1. Software system 200, which is stored in memory either locally and/or remotely from system 100, can include one or more application programs, such as application software, which may be "loaded" (i.e., transferred from storage into memory) for execution by the data-processing apparatus 100. The data-processing apparatus 100 of FIG. 1 receives user commands and data through user interface 207; these inputs may then be acted upon by the data-processing apparatus 100 in accordance with instructions from an operating module (not shown) and/or application module(s).

Software system 200 of FIG. 2 includes or has access to a distribution network model 208. The distribution network model 208 is for a specific domain and includes rules for generating distribution network elements from the 2D representations and constructing the multidimensional digital model. The data extractor module 202 is configured to receive computer readable 2D representation 201, such as CAD drawing data, and to extract geometric features from the 2D representation 201 as well as extract properties associated with distribution network elements. A geometric feature library 211 provides geometric features which can be used to extract basic geometric features from the representation. Appropriate geometric computation technology, digital image processing technology, and recognition technology, such as pattern recognition technology, can be used to automatically identify and extract geometric features and properties associated therewith.

A distribution network element generator 213 is configured to generate distribution network elements from the geometric features according to the distribution network model. The template library 212 provides feature templates which can be used to extract objects from the 2D representation. The object library 210 provides pre-defined objects which can be used to substitute similar or different objects for identified objects of the 2D representation. A validator module 203 is configured to validate the generated distribution network elements. The heuristic post editor module 204 is configured to render possible generation errors on user interface 207 and refine elements in response to user interface entered commands/data. The multi-dimensional digital model constructor module 205 is configured to construct from the generated elements the digital model of the distribution network in accordance with the distribution network model. The model library 209 can be used in construction of the multi-dimensional digital model. The computer readable expressions 206 of the digital model can be generated and rendered on interface 207. The interface 207, which is preferably a graphical user interface (GUI), also serves to display results, whereupon the user may supply additional inputs or, for example, terminate a given session.

The following description is presented with respect to embodiments of the present invention, which can be embodied in the context of a data-processing system, such as data-processing system 100 and computer software system 200, depicted respectively in FIGS. 1-2. It should be appreciated that FIGS. 1-2 are only exemplary and are not intended to assert or imply any limitation with regard to the architectures and environments in which aspects or embodiments of the present invention may be implemented. Therefore, the description of the exemplary embodiments, which follows, is for purposes of illustration and not considered a limitation.

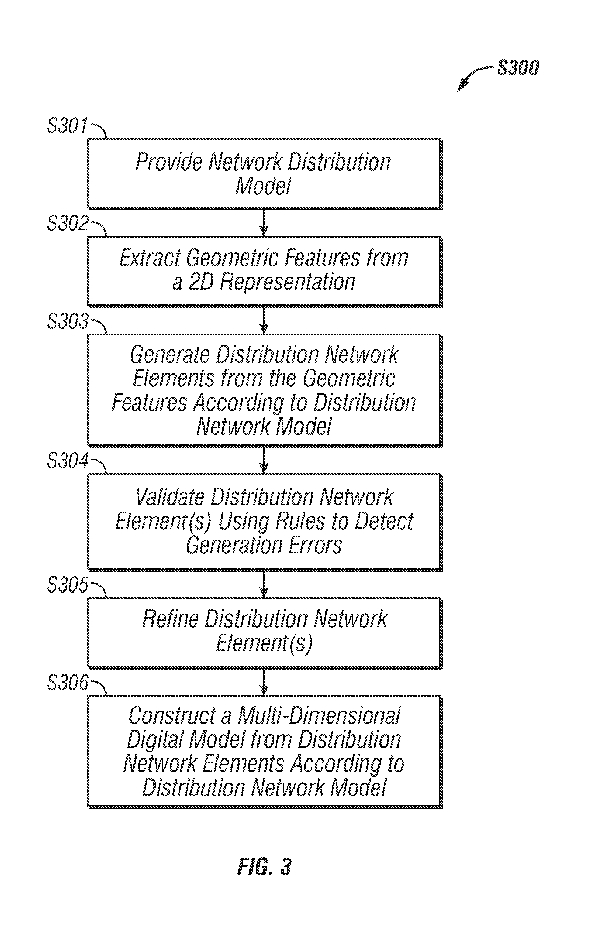

Referring to FIG. 3 of the accompanying drawings, which illustrates a flow chart outlining process 300 for constructing multi-dimensional digital models for a distribution network according to one embodiment, initially a distribution network model for a distribution network of a domain is provided (S301). Geometric features are extracted from a computer readable 2D representation of the distribution network (S302). Distribution network elements are generated from the geometric elements according to the distribution network model (S303). Distribution network elements are network objects as well as network components interconnecting the objects in the distribution network, and also include semantic information on associated attributes and spatial and hierarchical relationships between elements. These generated distribution network elements are validated using rules to detect errors resulting from their generation (S304). The elements can be refined (S305). Refining is used herein to mean adding data, modifying data, deleting data, editing data, and correcting data/errors or a combination thereof. A multi-dimensional data model, consistent with a set of pre-defined semantic definitions, is constructed from the refined extracted data (S306).

Multi-dimensional model data model can be expressed in several different ways. Visualization of the geometry of the modeled objects is one of several possible expressions of the multi-dimensional model data. Representation according to a pre-defined set of semantic definitions or standards is another possible expression.

By applying rules to the extracted data to determine possible property data associated with the distribution network elements and enabling the distribution network elements to be refined, for example, using a heuristic post editing system, the element properties can be deduced from already unambiguous data and matched to a well-defined semantic structure. As will be explained more fully below, the deduced object properties may be matched to well-defined semantic structure embodied in current or not yet developed classes or standards for expressing models. For example, object properties can be matched to semantic structure embodied in ISO/PAS 16739, also known as the Industry Foundation Classes (IFC), the leading way to express a Building Information Model (BIM). One skilled in the art will understand that this extraction process may allow data to be systematically matched to any semantic model designed to describe data in the domain, with varying richness of geometric and semantic detail.

In one illustrative embodiment, the distribution network is in the domain of architecture, engineering, and/or construction (AEC) environment. By way of example, the distribution network may be a building distribution network such as a HVAC (heating, ventilation, and air conditioning) system, plumbing system, piping system, electrical system, communication network, walls, doors, windows, security system, control system, and the like. The multi-dimensional digital model for the domain of AEC can be a Building Information Model. Compared with the traditional CAD drawings, BIM is a more productive way of working for all AEC professionals, from architect or designer, through the structural and MEP engineers to the contractor, and finally to the owner. However, companies have traditionally accumulated large amounts of legacy data as 2D CAD drawings. It has been determined that there is a need for systems and methods for easily and cost effectively converting 2D CAD drawings to BIM models, which not only includes the 3D geometric model, but also includes other properties. These improvements would allow all stakeholders to easily access or modify these BIM models in the building whole lifecycle.

It has been determined that there are many applications needing rich information about the physical configuration of HVAC systems. Examples of such applications are contract bidding, building performance simulation, energy optimization, system fault diagnosis, building management system, and so on. It has been identified that conventional 2D CAD drawings is only man-readable and that its information fragmentation is always an obstacle to information sharing and exchange among different phases of construction. Furthermore, manually re-modeling these CAD drawings into BIM model is error-prone and high cost.

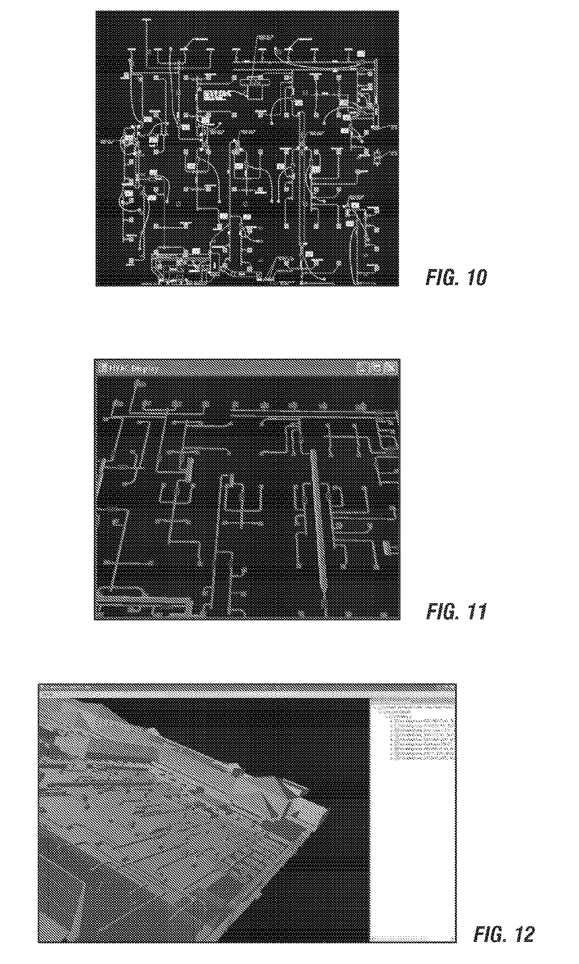

In order to more adequately understand method 300, an example of the method will now be described in more detail with reference to the domain of AEC. It should be appreciated that the same method 300 may be applied to 2D representations of a distribution network of any domain, such as industrial systems, conceptual drawings (e.g., process control loops, system diagrams), and that data extracted from these sources may be mapped to any appropriate multi-dimensional geometric and information schema. An example of a 2D representation for a HVAC distribution network is a 2D HVAC CAD drawing shown in FIG. 10. The 2D representation can be in any computer readable format. The distribution network model 208 for the HVAC system is a HVAC model. The data extractor 202 extracts geometric features from the 2D HVAC CAD drawing.

The distribution network elements (objects and network components) are then generated by the element generator 213 based on these geometric features according to the distribution model. For the specific domain of HVAC, the HVAC objects are, for example, diffusers, controllers, VAVs, and the network components are pipes, etc. Rules for identifying objects and network components and the relationships among them are contained in the distribution network model as are rules for deducing spatial relationships.

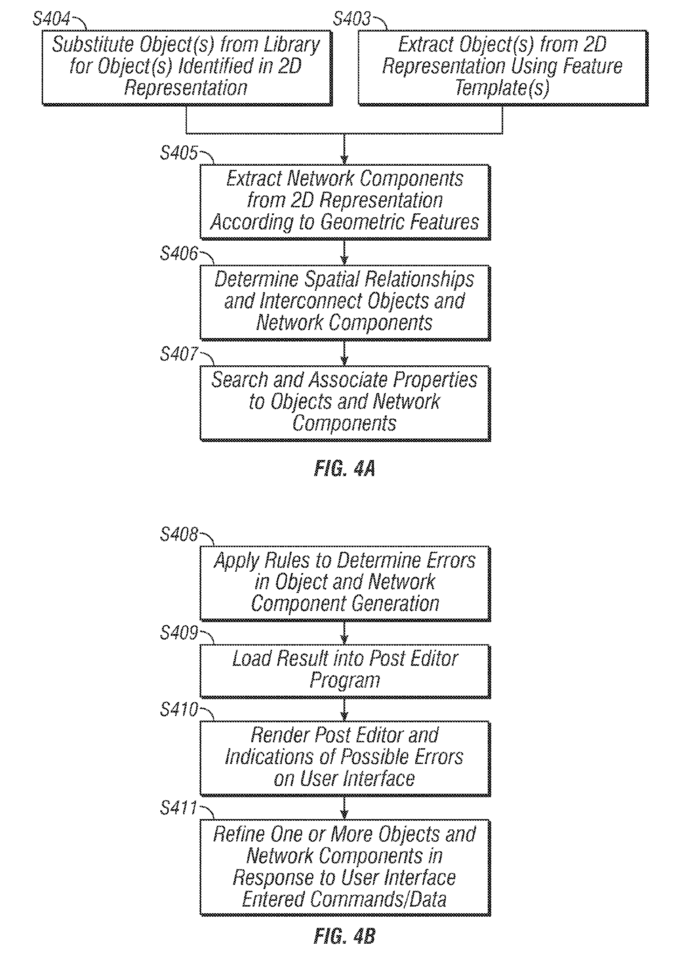

FIG. 4A is a flow chart illustrating the process of generating distribution network elements (S303) in more detail. Initially, the distribution network objects are generated. These objects can be generated in different ways. As will be explained in more below, in one example, an object can be extracted from the 2D representation by applying an object feature template (S403). In another example, an object can be generated by substituting an object from the object library for an object contained in the 2D representation (404). Objects can be generated using one or both of these object generation methods.

Referring to object extraction using a feature template (S403), extracted object location and/or dimension or other geometric information is identified from the 2D representation and a feature template is applied to the representation to extract the object according to the template. Extracted object location can be either a geographical location or relational location. Object dimension information can be accurate or approximate. The feature template can be composed of shapes, colors, or textures, etc. For the specific domain of HVAC, possible HVAC objects, such as diffusers, controllers, VAVs, etc. are generated from the 2D HVAC drawing using feature templates.

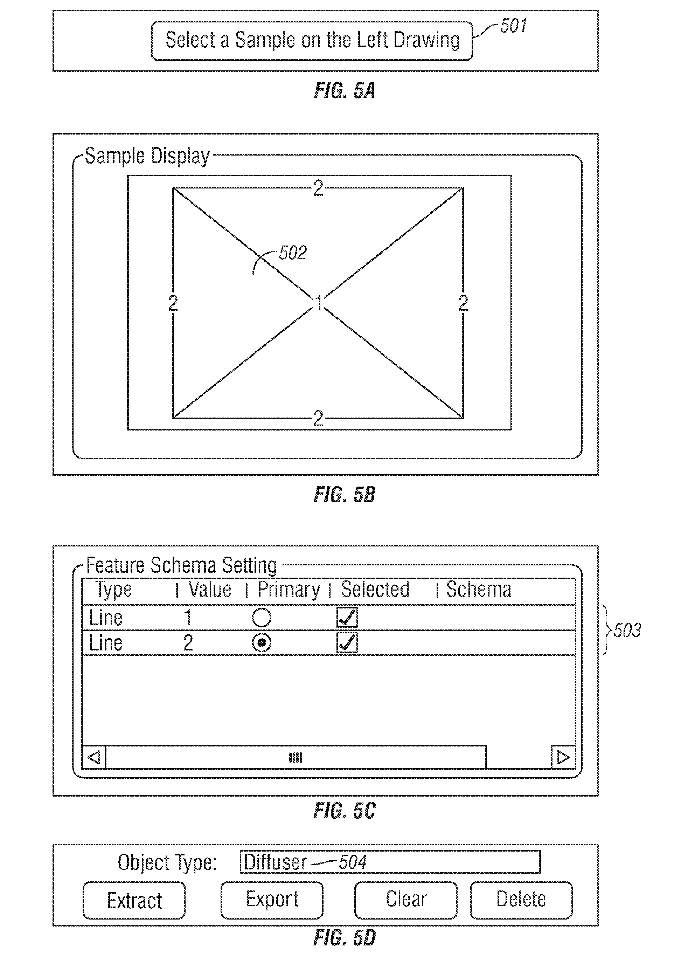

Object extraction may be performed in response to user interface entered commands/instructions. The extractor module 202 is configured to render options on the user interface 207 and controls the extraction process in response to user interface entered inputs. By way of example, FIGS. 5A-5D illustrate exemplary screen shots on user interface 207 at different stages of the extraction process. In this example, extractor module 202 selects a sample from 2D HVAC computer drawing data in response to a user interface selection of icon 501. A sample may be composed of some geometric primitives (such as line, circle arc, text, etc). For example, the user interface entered selection may be the result of a user selecting the icon entitled "select a sample on the left drawing" (FIG. 5A) via user interface 207 using a mouse (not shown). In response, extractor module 202 displays the selected sample 502 on the user interface (FIG. 5B). In addition to the sample selection, some other primitives on the 2D CAD drawing, which do not belong to the sample, can also be selected (not shown).

Features of the selected sample are set by extractor module 202 in response to corresponding user interface entered selections 503 (FIG. 5C). The feature setting decides which primitives in the FIG. 5B belong to the sample. Primitive's properties (such as width, color, etc) may be set as the features in FIG. 5C. A user interface entered selection of an object 504 is determined as a result of a user entering data corresponding to a particular object type into the user interface. In the example of FIG. 5D, the object type 504 entered into the user interface is a "diffuser". The extractor 202 extracts from the 2D drawing data 201 one or more objects 504 with similar features to the selected object type. To this end, the extractor 202 retrieves the primitives with similar features, groups the resulting primitives, and verifies the group with similar structure of the Sample.

Referring now in more detail to generating objects by substitution (S404 of FIG. 4A), an object from the object library 210 (such as a HON product library) can be substituted for an object extracted from the 2D representation. For example, a 2D object extracted from the 2D representation can be matched to a definition of the 3D geometry for that object. This definition may be kept in the object library so that it may be used repeatedly for the transformation of many such models. Such an object library may contain 3D geometry for specific models of a given device and/or from a specific manufacturer. Alternatively, such objects may be generic in nature, representing an approximation of the geometry if the manufacturer is not known. For example, for a duct segment, its 3D geometry can be generated according to its radius and length with International Publication Application No. WO 2009/109061 A1 (Published September 11, 2009) entitled "MODEL DRIVEN 3D GEOMETRIC MODELING SYSTEM". For a 2D HVAC drawing, a value is assigned to represent the relative height of HVAC network from the ground and then all objects on the drawings are automatically put on position in Z dimension.

The object obtained from the object library can, if necessary, be scaled, and inserted at the extracted location. These techniques enable a 2D representation, such as CAD drawing with generic objects, to be re-populated with other object products from a particular manufacturer or supplier library. For 2D graphical representations that represent location, object location can be extracted from an accurate, scale-model 2D plan. It is also possible to generate the multi-dimensional digital model as a relational data model (and even a 3D visual model) from a 2D drawing or other representation where the location information is only relative to the drawing itself, not to a physical structure.

How objects are generated may be depend on the requirements of the end-users. For example, different end-users of 3D geometry have different needs for information, and some applications of these methods will serve some end users, but be insufficient for others. For example, to operate a building, an approximation of object size is fine, so long as location is correct. The building is already built. There cannot be any conflicts between ducts and pipes and equipment because these elements are already put in place, so if the object size is only approximate, it is unlikely to affect anyone in the operation of the facility. However, that same sort of approximation would be inadequate for someone who is in the construction process and needs to assess whether a particular object will fit in a particular location, given other surrounding equipment and structures. In such a case, the actual dimensions of a model-specific piece of equipment are extracted from the 2D representation. The object from the library is then scaled to those actual dimensions and inserted into the extracted location in place of the object of the 2D representation.

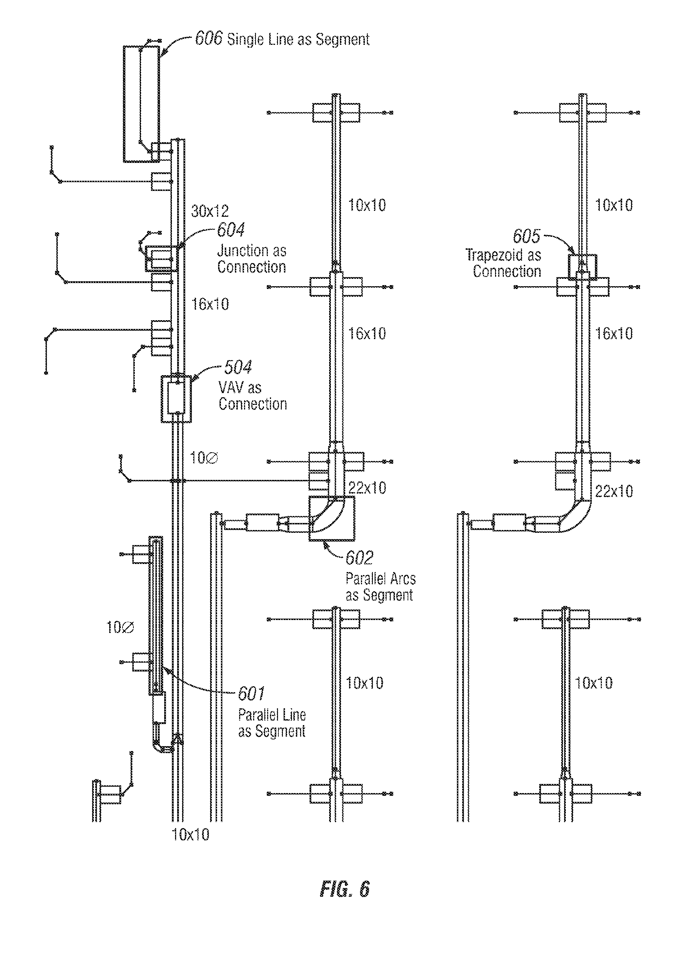

As indicated in FIG. 4A, the distribution network element generation process also includes extracting network components from the 2D representation according to extracted geometric features (S405). Geometric features can be composed, for example, of connectivity, parallelism, etc. For the HVAC distribution network, extracted network components can be duct networks, such as pipes, junctions, etc, as illustrated in FIG. 6. A duct segment can, for example, be represented as parallel lines 601, parallel arcs 602, or single lines 606. In Fig 6, most duct segments are composed of two parallel lines. Connectors combine the duct segments. In Fig 6, VAV 504, junction (604), and trapezoid (605) are examples of connectors. The extractor 202 extracts the parallel lines 601, parallel arcs 602 and single lines 606 as duct segments. The extractor 202 extracts the trapezoid 603, and/or the junctions 604 as the duct connections, as indicated in FIG. 6.

Referring again to FIG. 4A, the spatial relationships among the generated distribution network elements (objects and network components) are determined from geometric elements according to the network distribution model and the generated objects are interconnected using the network components (S406). By way of example, FIG. 6 illustrates interconnected objects and network components generated from the HVAC 2D drawing of FIG. 10. The graph structure is constructed from the extracted duct network and objects for the HVAC system. The extracted objects 504, like diffusers, VAVs, etc., can be added into the graph. Connectors can be added to the isolated graph with help of the primitives' geometric structure.

Also, as indicated in FIG. 4A, the distribution network element generation process includes searching the 2D representation for possible properties associated with the generated distribution network elements (objects and network components) and associating these searched properties to the elements according to association policies of the distribution network model (S407). The network distribution model has rules that describe different objects as having different properties depending on object type. A search is made among all the extracted objects and/or network component properties for particular properties to be associated with a particular object/network component features based on the association policies.

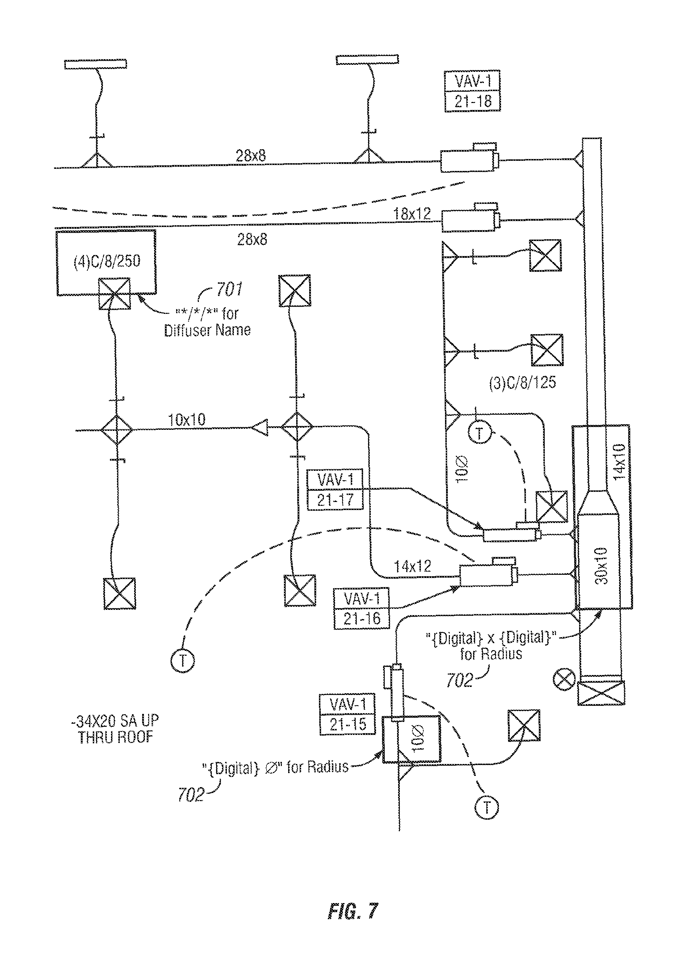

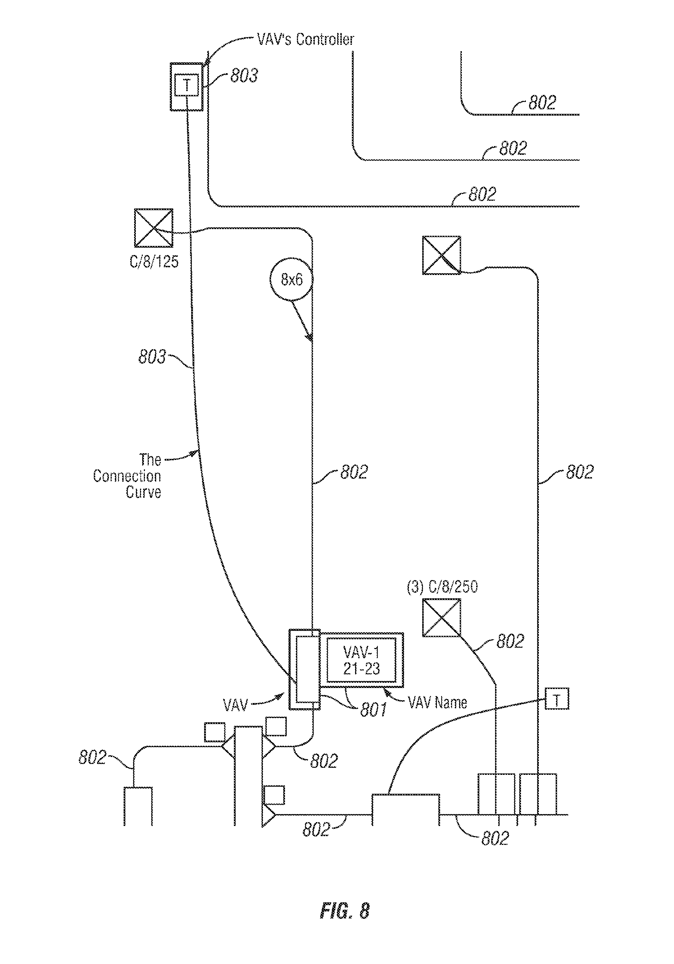

By way of example, FIG. 7 illustrates examples of searched HVAC properties for a diffuser (object), and duct (network component) and FIG. 8 illustrates examples of different association policies applied to HVAC VAV's controller (object) and duct (network component). Possible properties being extracted are mainly drawn as text Annotation 701, 701, as shown in FIG. 7. Multiple templates can be adopted to search the properties for extraction from the 2D drawing data. By way of example wildcard string 701, such "*/*/*" can be adopted for the diffuser's name, and a regular expression 702, such as the "{digital} Ø" or"{digital} x {digital}" can be adopted for the radius of duct. Other features can be adopted to distinguish duct properties, such as color, font, etc. Extracted properties may be name, location, size, alignment, orientation, or a combination thereof. The interface is similar to the object extraction.

Extracted properties may be associated to the objects 504 using pre-defined association policies. Association policies apply to, for example: properties nearby the object, such as VAV and its name, represented as lines 801; properties parallel to the object, such as Duct and its radius, represented by lines 802; properties connected via curves, such as VAV and its controller, represented by lines 803; and combinations thereof. Lines 801, 802, and 803 can be represented by respective colors, such as red, green, and blue (not shown). Association steps may include for example "get radius or section size for pipes" and "get controller or names for VAVs". The particular properties are then set to the object/network features.

FIG. 4B illustrates a flow chart illustrating in more detail the processes of validating and verifying the generated distribution network elements (S304 & S305 of FIG. 3). The generated objects and network components including the associated properties and their relationships are validated by applying rules to determine errors (S408). Rule based validation can be implemented by the validator module 203 to validate the result. For the HVAC system, for example, the extraction result can be validated using common engineering rules. These rules can, for example, define that the duct system is a complete network, the duct segments radius value has some range, a control element has a control loop, there is a duct connection between two duct segments with different sizes, and so on. Applying the engineering rules to the HVAC system can result in recognizing that a duct segment is missing, recognizing that an extracted radius value is outside the normal range for standard configurations or for this particular structure, recognizing that control elements (such as VAVs) do not have control loops defined, recognizing that objects have two ambiguous values for some property, recognizing that objects are missing labels, and so on.

The method of refining using a heuristic post editing system can for example comprise loading the validated distribution network elements into the heuristic post editing system; rendering an editing display of the editing system on a user interface; rendering the generated distribution network elements on the editing display; and refining one or more network elements according to at least one corresponding user interface entered editing command. Processes S409 to S411 of FIG. 4B illustrate the process of refining the generated distribution network elements (S305 of FIG. 3) according to one embodiment. The refining module is a Heuristic post-editor 204 used to refine the generated objects and network components including the associated properties and their relationships. To this end, the validated data is loaded into the heuristic post editor module program (S409). An interactive display and controls for the post editor is rendered on the user interface in conjunction with indications of possible errors determined by the validation process (S410).

The system can refine the distribution network elements (objects and network components) in response to user interface entered commands/data (S411). Any errors from the validation process rendered on the user interface can be edited using editing tools of the heuristic post editor. The heuristic post editor allows a user to therefore determine and visualize the errors. The heuristic editor is configured to provide tools to modify possible errors or add missing features to the extraction data via the user interface. For example, the heuristic editor is configured to render command icons for adding, modifying, and removing objects from the extraction data. The heuristic editor is further configured to add, modify, and remove objects in response to a user interface entered selection of the respective corresponding command icons. The heuristic editor is adapted to deduce the possible properties for the newly added and/or modified objects.

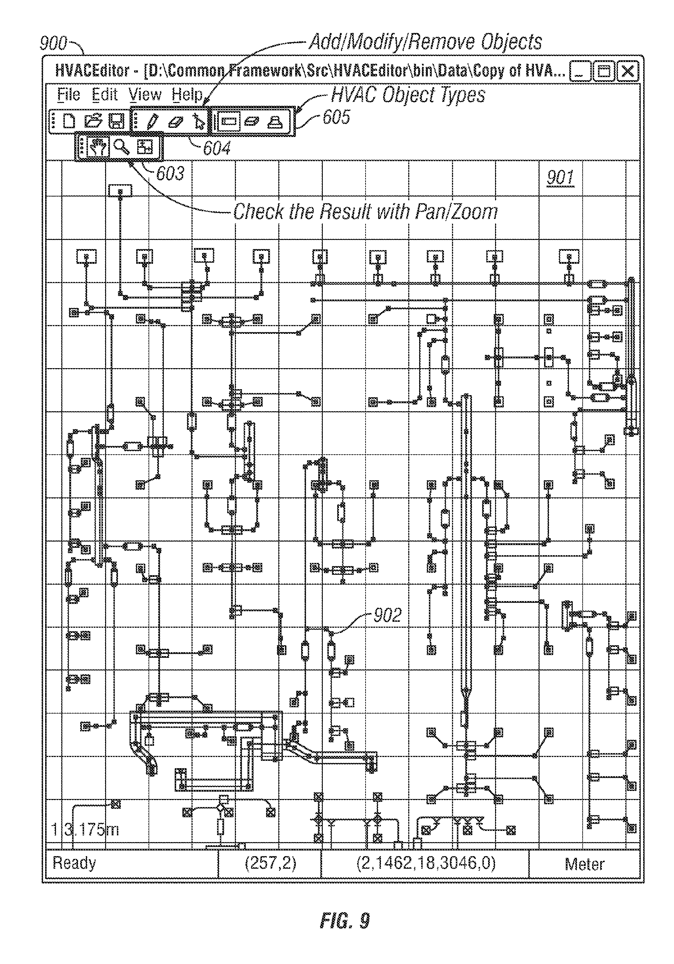

By way of example, FIG. 9 illustrates an exemplary rendered heuristic post editor interactive display according to one embodiment showing the validated HVAC objects and network components together with tools for refining them. In the example of FIG. 9, the heuristic post editor is being used to validate the data extracted from the CAD HVAC drawing. The 2D HVAC drawing is rendered on the user interface as the background 901. The extraction result 902 is overlaid on the background. The heuristic post editor 204 enables the validated extracted data to be checked and/or edited by a user. The editor 204 can highlight the possible errors detected in the previous validation, such as missing segments or connections, ambiguous values, etc. The user can therefore easily localize the error and then remediate it. The editor can also guide the user to easily set properties. For example, if some part is missing, the editor can guide the user to set it as a duct segment, VAV, or connection, and then set its corresponding properties.

Possible errors associated with the generated HVAC elements are, for example, two radii around a duct segment, and some duct segments are missing. As indicated in FIG. 9, editing tools of the editor 204 may be, for example, a pan and zoom tool configured to pan and zoom in on the rendered extracted data and background in response to user interface-entered activation of a pan and zoom icon 603 rendered on the control display. Another example of an editing tool is an add/modify/remove object tool configured to add, modify, and remove objects in response to user interface entered selection of an object and selection of a corresponding respective add, modify, and remove icon 604 rendered on the control display. Yet another example of an editing tool is a HVAC object type tool configured to select a particular object type in response to a user interface entered selection of a corresponding object type icon 605 rendered on the control display.

The rule based validator can effectively find the possible errors or ambiguous interpretations and the heuristic editor enables a user to easily fix a mistake during automatic recognition.

The multi-dimensional digital model describing the distribution network model is constructed from the result. For example, construction of a multi-dimensional digital model expressed as a 3D model can be based on a model-driven 3D modeling system. Examples of methods and systems for constructing the 3D building model can be found in International Publication Application No. WO 2009/109061 A1 (Published September 11, 2009) entitled "MODEL DRIVEN 3D GEOMETRIC MODELING SYSTEM", to Henry Chen et al., which is incorporated herein by reference in its entirety. By way of example, FIG. 12 illustrates an exemplary multi-dimensional digital model of the HVAC network constructed from validated HVAC objects and network components of the type shown in FIG. 9 and expressed as a 3D BIM Model for visualizing the geometry of the model objects.

Different digital expressions of the multi-dimensional digital model are possible. For example, the digital model can be expressed as visual 2D or 3D digital representations, a relational database, XML-formatted text, EXPRESS-formatted text, or other format consistent with ISO/PAS 16739 or any other semantic standard of expression. In the HVAC example, the constructor can, for example, express the HVAC multi-dimensional digital model as a building information model (BIM). By way of example, FIG. 11 illustrates an example of the BIM model of FIG. 12 output as a 3D drawing. If necessary, the model expression can be output in one or more various formats, such as database, IFC file, or CSV file.

Those skilled in the art would understand that the accompanying figures illustrating embodiments are merely depicting one example of the embodiments and that the embodiments are not limited thereto.

The embodiments and examples set forth herein are presented to best explain the present invention and its practical application and to thereby enable those skilled in the art to make and utilize the invention. Those skilled in the art, however, will recognize that the foregoing description and examples have been presented for the purpose of illustration and example only. Other variations and modifications of the present invention will be apparent to those of skill in the art, and it is the intent of the appended claims that such variations and modifications be covered.

The description as set forth is not intended to be exhaustive or to limit the scope of the invention. Many modifications and variations are possible in light of the above teaching without departing from the scope of the following claims. It is contemplated that the use of the present invention can involve components having different characteristics. It is intended that the scope of the present invention be defined by the claims appended hereto, giving full cognizance to equivalents in all respects.

## Claims

1. A method for constructing a multi-dimensional data model for a distribution network, the method comprising:
extracting geometric features from a 2D representation of a distribution network, said distribution network comprising a plurality of objects having a relationship to each other within a network;
generating distribution network elements from said geometric elements according to a network distribution model, said distribution network elements comprising objects and components of the network and including semantic information on associated attributes and relationships thereof;
validating at least one of said distribution network elements using rules to detect errors in the generation of the distribution network element(s);
refining at least one of said distribution networks elements; and
constructing a multi-dimensional digital model from said distribution network elements according to said distribution network model.

2. The method of claim 1, wherein generating said distribution network elements according to said network distribution model comprises:
generating a plurality of objects based on said extracted geometric features;
extracting at plurality of network components based on said extracted geometric features;
determining spatial relationships of said generated objects and network components; and
interconnecting said objects with said network components based on said spatial relationships.

3. The method of claim 2, wherein generating a plurality of objects based on said extracted geometric features includes:
extracting at least one object from said 2D representation according to a feature template of said at least one object.

4. The method of claim 2, wherein generating a plurality of objects based on said extracted geometric features includes:
substituting an object from a library for an object contained in said 2D representation.

5. The method of claim 4, wherein constructing a multi-dimensional digital model from said distribution network elements includes constructing said digital model from said substituted object, based on approximate or actual dimensions of said object contained in said 2D representation.

6. A system for constructing 3D building computer models from 2D building computer drawings, this comprising:
a processor;
a data bus coupled to said processor; and
a computer-usable medium embodying computer code, said computer-usable medium being coupled to said data bus, said computer program code comprising instructions executable by said processor and configured to:
extract geometric features from a 2D representation of a distribution network, said distribution network comprising a plurality of objects having a relationship to each other within a network;
generate distribution network elements from said geometric elements according to a network distribution model, said distribution network elements comprising objects and components of the network and including semantic information on associated attributes and relationships thereof;
validate at least one of said distribution network elements using rules to detect errors in the generation of the distribution network element(s);
refine at least one of said distribution networks elements; and
construct a multi-dimensional digital model from said distribution network elements according to said distribution network model.

7. The system of claim 6, wherein said computer program code further comprises instructions executable by said processor and configured to:
generate a plurality of objects based on said extracted geometric features;
extract a plurality of network components based on said extracted geometric features;
determine spatial relationships of said generated objects and network components; and
interconnect objects with said network components.

8. A computer-readable medium storing instructions that, when executed by a computer, cause the computer to perform a method for constructing a multi-dimensional data model for a distribution network, the method comprising:
extracting geometric features from a 2D representation of a distribution network, said distribution network comprising a plurality of objects having a relationship to each other within a network;
generating distribution network elements from said geometric elements according to a network distribution model, said distribution network elements comprising objects and components of the network and including semantic information on associated attributes and relationships thereof;
validating at least one of said distribution network elements using rules to detect errors in the generation of the distribution network element(s);
refining at least one of said distribution networks elements; and
constructing a multi-dimensional digital model from said distribution network elements according to said distribution network model.

9. The computer-readable medium claim 8, wherein generating said distribution network elements, according to said network distribution model, comprises;
generating a plurality of objects based on said extracted geometric features; extracting a plurality of network components based on said extracted geometric features;
determining spatial relationships of said generated objects and network components; and
interconnecting said objects with said network components based on said spatial relationships.

10. The medium of claim 9, wherein generating a plurality of objects based on said extracted geometric features includes:
extracting at least one object from said 2D representation according to a feature template of said at least one object.
